**Europäisches Patentamt**

**European Patent Office**

**Office européen des brevets**

(19)

(11) Publication number: **0 215 166**
**A2**

# EUROPEAN PATENT APPLICATION

(12)

(21) Application number: **85306465.7**

(22) Date of filing: **11.09.85**

(51) Int. Cl.⁴: **H 04 L 27/18**

(30) Priority: **15.05.85 JP 105380/85**

(43) Date of publication of application: **25.03.87**
**Bulletin 87/13**

(84) Designated Contracting States: **DE FR GB NL SE**

(71) Applicant: **MITSUBISHI DENKI KABUSHIKI KAISHA, 2-3, Marunouchi 2-chome Chiyoda-ku, Tokyo 100 (JP)**
Applicant: **Ikegami, Fumio, Yuniuji Manshion No. 5-7010 34-10 Kohatauchihata, Uji-shi Kyoto-fu (JP)**

(72) Inventor: **Ikegami, Fumio, Yuniuji Manshion No. 5-7010 34-10 Kohatauchihata, Uji-shi, Kyoto-fu (JP)**
Inventor: **Yoshida, Susumu, 10-7 Kohatakitabatake, Uki-shi, Kyoto-fu (JP)**
Inventor: **Takeuchi, Tsutomu, 10-63 Yamanawate Terado-cho, Muko-shi, Kyoto-fu (JP)**
Inventor: **Ariyavisitakul, Sirikiat, Kurahashi Manshion No. 3, 4 Yoshidakaguraoka-cho, Sakyo-ku, Kyoto-shi Kyoto-fu (JP)**

(74) Representative: **Wright, Peter David John et al, R.G.C. Jenkins & Co. 12-15, Fetter Lane, London EC4A 1PL (GB)**

(54) **Digital communication system.**

(57) The present invention provides a communication system which employs a signal whose carrier phase is shifted by a constant amount $\Delta\theta$ per time slot in correspondence to each symbol (1 or 0) transmitted, and the phase shift is performed by $\Delta\theta/2$ (or $-\Delta\theta/2$) in the first, 1/2 time slot and further by $\Delta\theta/2$ (or $-\Delta\theta/2$) in the second 1/2 time slot, to be combined with a half-bit differential detector, thereby to improve the bit error rate in multipath propagation.

TITLE OF THE INVENTION

Digital Communication System

BACKGROUND OF THE INVENTION

Field of the Invention

The present invention relates to a digital communication system and is applicable to, e.g., mobile radio communication.

Description of the Prior Art

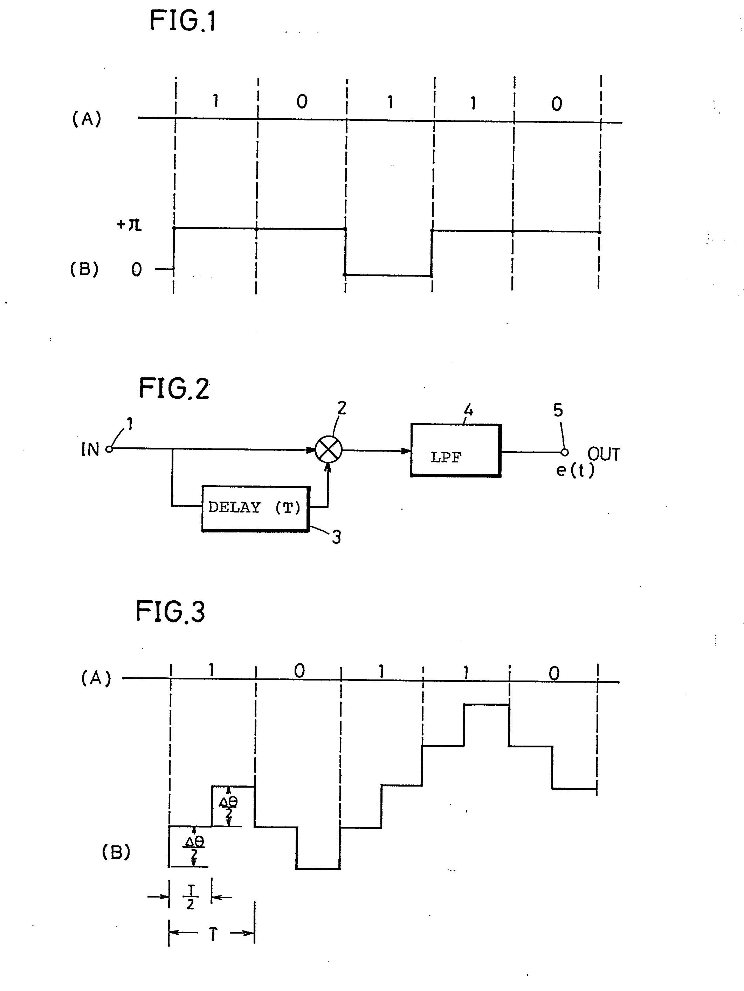

In a conventional digital communication system such as a mobile radio communication system, a digital signal modulated by a binary information sequence is received through different propagation paths whereby the bit error rate is extremely deteriorated by multipath propagation. Such a disadvantage is now described with respect to a conventional binary phase shift keying (BPSK) signal. In Fig. 1, symbol (A) denotes a binary information sequence consisting of symbols 1 and 0 and symbol (B) denotes phase change of a differentially encoded BPSK signal obtained in correspondence to the binary information sequence. When differential detection is performed, the phase of the BPSK signal is shifted by $+\pi$ radians with respect to the binary information symbol 1 and no such change is caused with respect to 0.

-2-

Fig. 2 shows a differential detection circuit which demodulates the BPSK signal to detect the original binary information sequence. The BPSK signal applied to an IN terminal 1 is divided into two signals to be fed to one input terminal of a multiplier 2 as well as to the other input terminal after having passed through a delay circuit 3 having a delay time of one time slot T. Then the two signals are multiplied by the multiplier 2, and removal of frequency components twice the carrier frequency is done by a low pass filter (LPF) 4, thus the original binary information signal, which is outputted from an OUT terminal 5, is reproduced.

For convenience of description a two ray model is assumed hereinafter as an example of multipath propagation.

In the case where the BPSK signal applied to the IN terminal 1 is the superposition of a BPSK wave (desired wave - hereinafter referred to as D wave) and its replica (undesired wave - hereinafter referred to as U wave) delayed by $\tau$ from the D wave, the output at the OUT terminal 5 is extremely reduced around portions in which the relative amplitude ratio $\rho$ of the U wave to the D wave is 1 and the carrier phase difference $\phi$ between the D and U waves is $\pi$ radians whereby the bit error rate is extremely degraded.

- 2 -

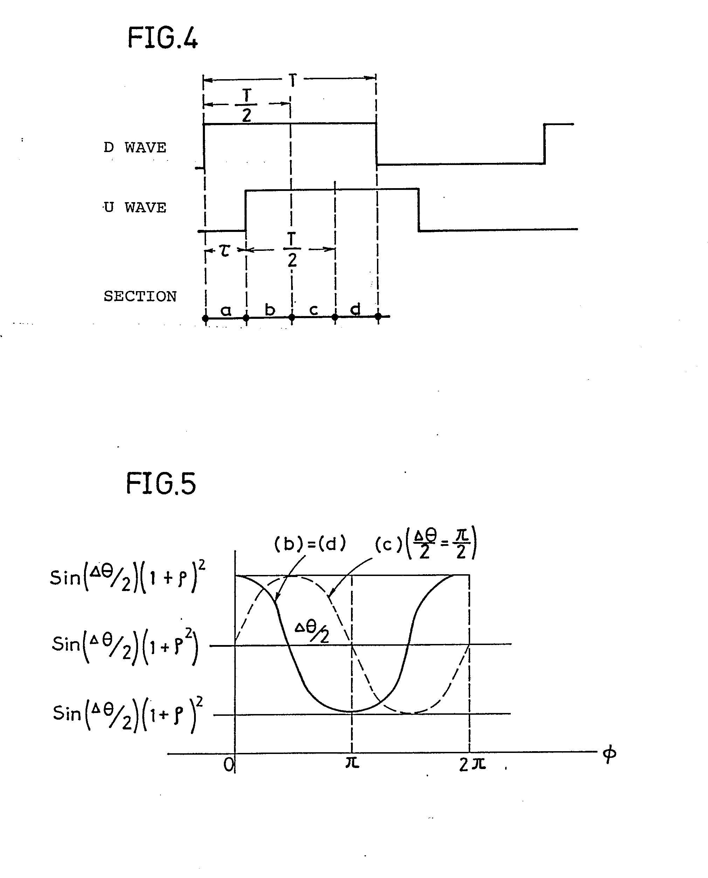

Fig. 4 illustrates the time relation between the D and U waves. Symbol T denotes the length of a time slot for transmitting a binary information symbol. Symbol a denotes a section from the beginning of the D time slot to the beginning of the U time slot, symbol b denotes a section from the beginning of the U time slot to the midst of D time slot, symbol c denotes a section from the midst of D time slot to the midst of U time slot, and symbol d denotes a section from the midst of U time slot to the end of the D time slot.

Demodulated signals e(t) obtained at the OUT terminal 5 in respective sections are as follows:

Section a:

$$2e(t) = \begin{cases} 1 - \rho^2 & \text{symbol change: "0"} \rightarrow \text{"1"} \\ 1 + \rho^2 + 2\rho\cos\phi & \text{symbol change: "1"} \rightarrow \text{"1"} \\ -(1 - \rho^2) & \text{symbol change: "1"} \rightarrow \text{"0"} \\ -(1 + \rho^2 - 2\rho\cos\phi) & \text{symbol change: "0"} \rightarrow \text{"0"} \end{cases}$$

...1(A)

Section b, c and d:

$$2e(t) = \begin{cases} 1 + \rho^2 + 2\rho\cos\phi & \text{symbol change: "1"} \\ -(1 + \rho^2 + 2\rho\cos\phi) & \text{symbol change: "0"} \end{cases}$$

...1(B)

in which $\rho$ represents the instantaneous amplitude ratio of the U wave to the D wave and $\phi$ represents the

- 4 -

instantaneous carrier phase difference between the D and U waves.

As obvious from the results of the above calculation, the demodulated signal e(t) obtained at the OUT terminal 5 is indefinite in the section a since it depends on the symbol of the preceding bit and the polarity thereof may be inverted depending on the value $\rho$, while such polarity is uniquely determined by the symbol of preset bit in all other sections b, c and d.

As obvious from the above expressions 1(B), however, values $e^b$, $e^c$ and $e^d$ of the signals e(t) in the sections b, c and d are substantially zero around portions in which the instantaneous amplitude ratio $\rho$ is 1 and the instantaneous carrier phase difference $\phi$ is $\pi$, whereby the so-called eye pattern is deteriorated and lateral fluctuation (timing fluctuation) is caused in the demodulated signals. In other words, the bit error rate is deteriorated in the portions around $\rho = 1$ and $\phi = \pi$ in multipath propagation.

SUMMARY OF THE INVENTION

The present invention has been proposed to overcome the aforementioned problem of deterioration of the bit error rate, and an object thereof is to provide a digital communication system with improved bit error rate in

- 4 -

multipath propagation in comparison with the conventional PSK or FSK modulation systems such as a BPSK system.

In other words, the present invention is to provide a communication system in which a demodulation output will not tend to zero and "eye" is opened even if the instantaneous amplitude ratio $\rho$ of a U wave relative to a D wave is around 1 and the instantaneous carrier phase difference $\phi$ between the D and U waves is around $\pi$, and there will occur now abrupt timing fluctuation of eye patterns in such condition.

The present invention is a communication system employing a signal with the phase of a carrier wave shifted by $\pm\Delta\theta$ in correspondence to each symbol of a binary information sequence whereby the phase shift operation is performed by $\Delta\theta/2$ (or $-\Delta\theta/2$) in the first half of one time slot and then further by $\Delta\theta/2$ (or $-\Delta\theta/2$) in the second half thereof, and the aforementioned modulated signal is to be modulated by a half bit differential detector.

These and other objects, features, aspects and advantages of the present invention will become more apparent from the following detailed description of the present invention when taken in conjunction with the accompanying drawings.

BRIEF DESCRIPTION OF THE DRAWINGS

Fig. 1 shows a differentially encoded conventional BPSK modulation system;

Fig. 2 is a schematic diagram showing a demodulation circuit for a BPSK signal;

Fig. 3 illustrates a $\Delta\theta/2 \cdot$DSK signal according to the present invention;

Fig. 4 shows the time relation between a D wave and a U wave in the BPSK modulation system;

Fig. 5 illustrates the demodulation output of the $\Delta\theta/2 \cdot$DSK signal;

Figs. 6 and 7 show examples of the characteristics of the $\Delta\theta/2 \cdot$DSK system and some other modified systems;

Fig. 8 shows power spectra of the $\Delta\theta/2 \cdot$DSK system according to the present invention and some other modified systems;

Fig. 9 shows the power spectrum of the conventional BPSK system; and

Fig. 10 shows out-of-band power characteristics.

Fig. 11 shows a schematic diagram showing a demodulation circuit for a DSK signal.

DESCRIPTION OF THE PREFERRED EMBODIMENTS

Fig. 3 shows the manner of shifting the phase by $\pm \Delta\theta/2$ per 1/2 time slot thereby to shift the same by $\pm \Delta\theta$ in total in correspondence to a binary information symbol.

Such a system of shifting the phase by $\pm\Delta\theta/2$ in the first half time slot and shifting the same further by $\pm\Delta\theta/2$ in $\Delta\theta/2\cdot$DSK modulation system.

Fig. 3 illustrates a binary information sequence (Fig. 3(A)) and a $\Delta\theta/2\cdot$DSK signal (Fig. 3(B)) subjected to $\Delta\theta/2\cdot$DSK modulation by the same.

When the binary information symbol is 1, the phase is first shifted by $+\Delta\theta/2$ and then further by $+\Delta\theta/2$ after a lapse of 1/2 time slot, whereby the total amount of the phase shift is $\Delta\theta$. When the binary information symbol is 0, the phase is shifted by $-\Delta\theta/2$ and then further by $-\Delta\theta/2$ after a lapse of 1/2 time slot.

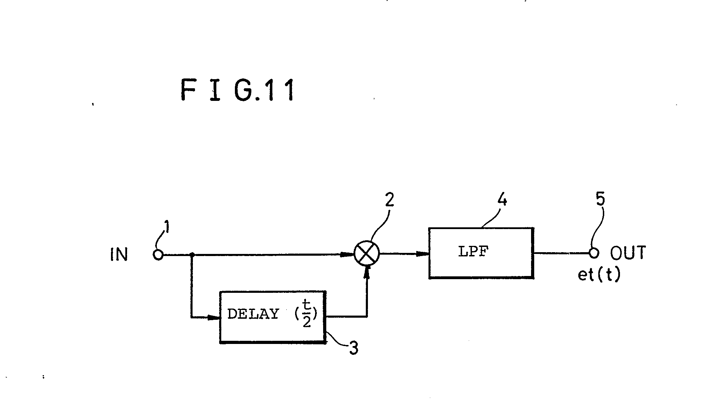

When the two ray multipath signal of the $\Delta\theta/2\cdot$DSK is received and demodulated by the differential detector as shown in Fig. 11, an OUT terminal 5 outputs demodulated signals e(t) given by the following expressions (4). It is to be noted that sections a to d correspond to the sections a to d as shown in Fig. 4.

Section a:

$$
e(t) = \begin{cases}
(\sin\Delta\theta/2)\,(1-\rho^2) & \text{symbol change: "0"} \to \text{"1"} \\
(\sin\Delta\theta/2)\left\{1+\rho^2+2\rho\cos(\Delta\theta/2-\phi)\right\} & \\
& \text{symbol change: "1"} \to \text{"1"} \\
-(\sin\Delta\theta/2)\,(1-\rho^2) & \text{symbol change: "1"} \to \text{"0"} \\
-(\sin\Delta\theta/2)\left\{1+\rho^2+2\rho\cos(\Delta\theta/2+\phi)\right\} & \\
& \text{symbol change: "0"} \to \text{"0"}
\end{cases} \quad (4)
$$

-8-

Section b, d:

$$e(t) = \begin{cases} (\sin \Delta\theta/2)(1 + \rho^2 + 2\rho\cos\phi) & \text{symbol: "1"} \\ -(\sin \Delta\theta/2)(1 + \rho^2 + 2\rho\cos\phi) & \text{symbol: "0"} \end{cases} \qquad (4$$

Section c:

$$e(t) = \begin{cases} (\sin \Delta\theta/2)\{1 + \rho^2 + 2\rho\cos(\phi - \Delta\theta/2)\} & \text{symbol: "1"} \\ -(\sin \Delta\theta/2)\{1 + \rho^2 + 2\rho\cos(\phi + \Delta\theta/2)\} & \text{symbol: "0"} \end{cases}$$

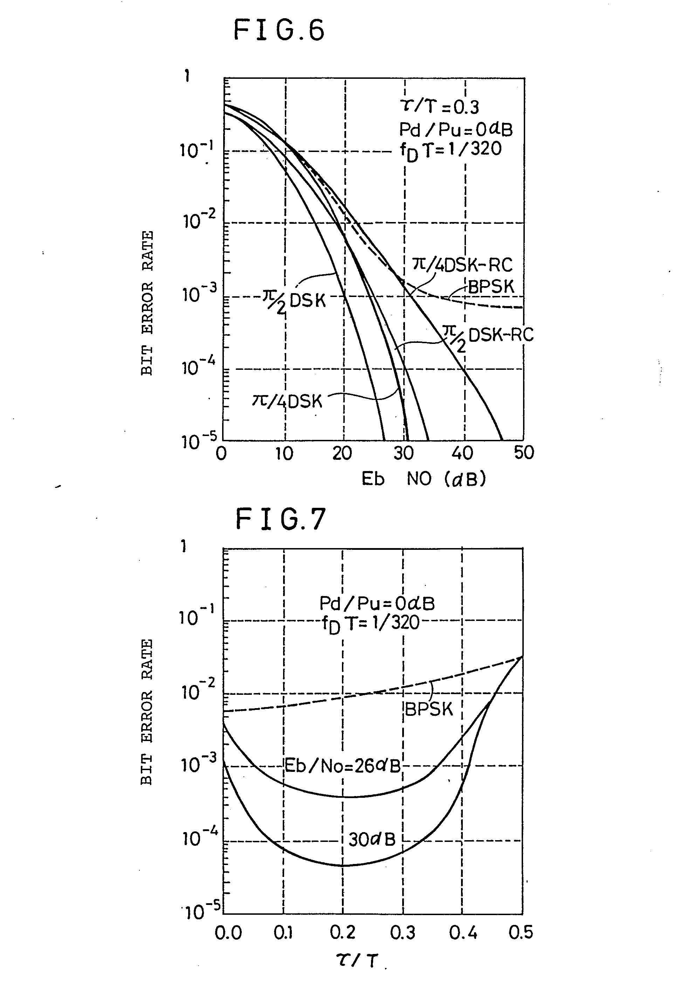

Fig. 5 shows calculated values of the above expressions for b, d and c vs. $\phi$.

The values are changed sinusoidally with a central value $\sin(\Delta\theta/2)(1 + \rho^2)$ lying between the maximum value $\sin(\Delta\theta/2)(1 + \rho)^2$ and the minimum value $\sin(\Delta\theta/2)(1 - \rho)^2$. The value in the section c deviates by $(\Delta\theta/2)$ along the $\phi$ axis from those in the sections b and d. In Fig. 5, $\Delta\theta/2$ is equal to $\pi/2$.

Thus, the output values $e(t)^{b,d}$ in the sections b and d and $e(t)^c$ in the section c as a function of $\phi$ are out of phase by $(\Delta\theta/2)$ from each other, whereby the output from the differential demodulator will not tend to zero at the same value of $\phi$.

Consequently, the eye pattern is not annihilated and therefore little timing fluctuation is observed.

Figs. 6 and 7 show examples of the performance of the $\Delta\theta/2 \cdot$DSK modulation system. Fig. 6 shows change in the bit error rate vs signal-to-noise ratios and Fig. 7 shows change in the bit error rate with respect to change of the delay time between the D and U waves under a constant signal-to-noise ratio. As for the shown case, the envelopes of D and U waves are both subject to Rayleigh distribution. Symbols $P_d$ and $P_u$ respectively denote average power of the D and U waves, symbol $E_b$ denotes signal energy per bit, symbol $N_o$ denotes noise power per unit frequency and symbol $f_D$ denotes the maximum fading frequency.

As obvious from Fig. 5, the degree of compensation between the levels $e(t)^{b,d}$ and $e(t)^c$ is increased by increasing the value $\Delta\theta$ toward $\pi$, and the degree of such compensation is most increased when the value $\Delta\theta/2$ is between $\pi/2$ and $\pi$ since the values $e(t)^{b,d}$ and $e(t)^c$ are proportional to $\sin(\Delta\theta/2)$ respectively. It has been confirmed that the said degree of compensation is most increased when the value $\Delta\theta/2$ is around 110°.

Fig. 6 shows the bit error rates of the $\Delta\theta/2 \cdot$DSK and $\pi/4 \cdot$DSK systems in which the phase shift of $\Delta\theta/2$ is performed in a stepped manner per 1/2 time slot and those of $\pi/2 \cdot$DSK-RC and $\pi/4$ DSK-RC systems as examples of $\Delta\theta/2 \cdot$DSK-RC in which the phase shift is performed in the form of smoothed raised cosine waves for controlling the frequency bandwidth of the signals.

In the case where the value $\Delta\theta/2$ is changed in a stepped manner, the degree of compensation between the levels $e(t)^{b,d}$ and $e(t)^c$ is reduced with decrease of the value $\Delta\theta/2$ and hence the $\pi/2\cdot$DSK and $\pi/4\cdot$DSK signals are less improved in bit error rate, whereas the same are remarkably improved in comparison with the BPSK system signal.

Particularly in regions in which the value Eb/No is increased to higher value, the bit error rate of BPSK signal is saturated at the value around $10^{-3}$ while that of the $\Delta\theta/2\cdot$DSK signal is for more and improved.

In the case of the raised cosine wave, the bandwidth of the modulated signal is advantageously narrowed while the bit error rate is less improved in comparison with the $\Delta\theta/2\cdot$DSK system. Also in this case, however, no saturation is caused and the bit error rate is improved with increase of Eb/No.

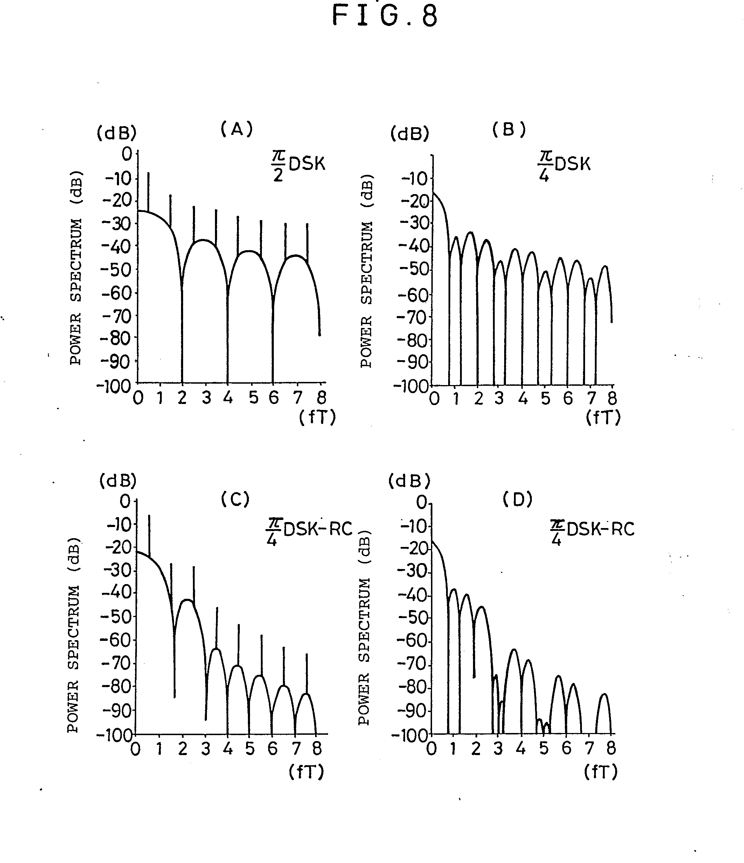

Fig. 8 shows the power spectra of the respective systems as hereinabove described.

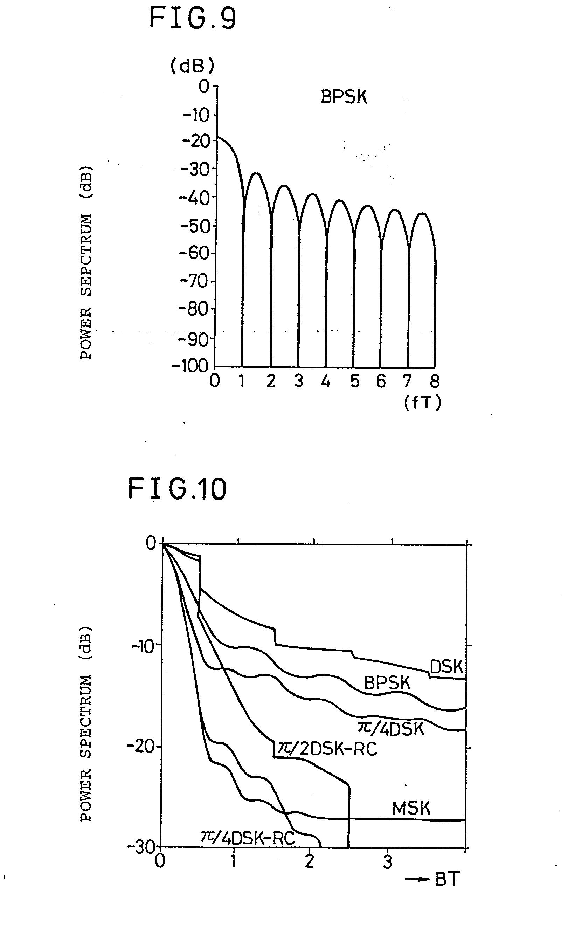

Fig. 8(A) shows the power spectrum of the $\pi/2\cdot$DSK system and Fig. 8(B) shows that of the $\pi/4\cdot$DSK system while Fig. 8(C) shows that of the $\pi/2\cdot$DSK-RC system and Fig. 8(D) shows that of the $\pi/4\cdot$DSK-RC system. Fig. 9 shows the power spectrum of the BPSK system for comparison.

Fig. 10 shows the out-of-band characteristics of the respective systems.

In these drawings, symbol B denotes the bandwidth and symbol $\underline{f}$ denotes the frequency while symbol T denotes the time slot interval. The out-of-band power cannot be much reduced in the $\Delta\theta/2\cdot$DSK and BPSK systems since the carrier phases are changed in a stepped manner. In the $\Delta\theta/2\cdot$DSK-RC system, however, the out-of-band power is reduced to nearly the same extend as that of the MSK system since the phases are smoothly changed. In a practical device, the aforesaid waveform can also be produced by a band restricting filter or other equivalent techniques to operate similarly to the $\Delta\theta/2\cdot$DSK-RC system. Thus, it is understood from the above data that the $\Delta\theta/2\cdot$DSK-RC system remarkably improves the bit error rate while restricting the signal bandwidth to be relatively narrow.

Although the present invention has been described and illustrated in detail, it is clearly understood that the same is by way of illustration and example only and is not to be taken by way of limitation, the spirit and scope of the present invention being limited only by the terms of the appended claims.

CLAIMS:

1. A digital communication system employing a signal for shifting the phase of a carrier wave by $\Delta\theta$ per time slot clockwise or counter clockwise in correspondence to each symbol of a binary information sequence,

said signal shifting said phase by $\Delta\theta/2$ in the first half of one time slot and further by $\Delta\theta/2$ in the second half thereof.

2. A digital communication system in accordance with claim 1, wherein

a signal of performing $\Delta\theta/2$ phase shift in a stepped manner is employed.

3. A digital communication system in accordance with claim 1, wherein

a signal is employed for performing continuous $\Delta\theta/2$ phase shift in a predetermined time period within 1/2 time slot.

4. A digital communication system in accordance with claim 3, wherein

a signal making rise of $\Delta\theta/2$ phase shift in a raised cosine curve is employed.

5. A digital communication system in accordance with claim 1, wherein

said amount $\Delta\theta/2$ of one phase shift is $\pi/2$.


6. A digital communication system in accordance with claim 1, wherein

said amount $\Delta\theta/2$ of one phase shift is $\pi/4$.


7. A digital communication system in accordance with claim 1, wherein

said amount $\Delta\theta/2$ of one phase shift is around 110°.


8. A digital communication system comprising a modulation system of phase-shifting, in correspondence to binary information symbols transmitted in a prescribed time slot, twice by $+\Delta\theta/2$ per 1/2 time slot for the one information symbol and twice by $-\Delta\theta/2$ per 1/2 time slot for the other information symbol thereby to perform double phase shift keying modulation and

a demodulator system which delays one of the two signals, obtained by dividing the received signal, by 1/2 time slot to multiply the same by the other signal and integrate the result of said multiplication thereby to obtain the original said binary information symbols.

-14-

9. A system for transmitting digital signals in which the phase of a carrier signal during successive time slots is selectively altered by a predetermined amount in order to transmit respective signal bits, characterised in that the predetermined amount of alteration of the phase during a particular time slot is carried out cumulatively over at least a substantial part of the time slot.

FIG.1

(A)

| 1 | 0 | 1 | 1 | 0 |

+π

(B)  0

FIG.2

IN ○——————————⊗——————→ LPF ——————○ OUT
1            2        4         5    e(t)

└——→ DELAY (T) ——┘
         3

FIG.3

(A) ———— 1 | 0 | 1 | 1 | 0 ————

(B)

$\frac{\Delta\theta}{2}$

$\frac{\Delta\theta}{2}$

$\frac{T}{2}$

T

0215166

2/6

# FIG.4

# FIG.5

0215166

3|6

# FIG.6

$\tau/T = 0.3$
$Pd/Pu = 0 dB$
$f_D T = 1/320$

BIT ERROR RATE

$\pi/4$DSK-RC
BPSK

$\frac{\pi}{2}$DSK

$\frac{\pi}{2}$DSK-RC

$\pi/4$DSK

Eb NO (dB)

# FIG.7

BIT ERROR RATE

$Pd/Pu = 0 dB$
$f_D T = 1/320$

BPSK

$Eb/No = 26 dB$

$30 dB$

$\tau/T$

4|6

# FIG.8

(A) $\frac{\pi}{2}$DSK

(B) $\frac{\pi}{4}$DSK

(C) $\frac{\pi}{4}$DSK-RC

(D) $\frac{\pi}{4}$DSK-RC

0215166

## FIG.9

(dB)

POWER SEPCTRUM (dB)

BPSK

## FIG.10

POWER SPECTRUM (dB)

DSK

BPSK

$\pi/4$DSK

$\pi/2$DSK-RC

MSK

$\pi/4$DSK-RC

→ BT

F I G.11